# EUROPEAN PATENT APPLICATION

(11) **EP 4 838 614 A1**
(43) Date of publication of application: **11.11.2026**
(21) Application number: 26172833.1
(22) Date of filing: 16.04.2026
(51) Int. Cl.: H01M 10/0583, H01M 50/48, H01M 50/474, H01M 50/477

(54) **ELECTRODE LAMINATE AND METHOD FOR MANUFACTURING ELECTRODE LAMINATE**

(30) Priority: 07.05.2025 JP 2025077417
(71) Applicant: Toyota Jidosha Kabushiki Kaisha, Toyota-shi, Aichi-ken 471-8571 (JP)
(72) Inventor: SAKASHITA, Yasuhiro, TOYOTA-SHI, AICHI-KEN, 471-8571 (JP); SHIMURA, Yosuke, TOYOTA-SHI, AICHI-KEN, 471-8571 (JP); IKEYAMA, Suguru, TOYOTA-SHI, AICHI-KEN, 471-8571 (JP); HIRUKAWA, Tomofumi, TOYOTA-SHI, AICHI-KEN, 471-8571 (JP); NAKANO, Takahiko, TOYOTA-SHI, AICHI-KEN, 471-8571 (JP); KATO, Kazuhito, TOYOTA-SHI, AICHI-KEN, 471-8571 (JP)
(74) Representative: Cabinet Beau de Loménie

(57) **Abstract**

The electrode laminate includes a plurality of electrode sheets stacked along a first direction, a separator that is elongated and extends in a zigzag shape between the electrode sheets, and a restraint member that collectively surrounds the electrode sheets and the separator. The restraint member is provided with an opening portion configured to open toward a second direction orthogonal to the first direction, and a plurality of through-holes extending through the restraint member in a third direction orthogonal to each of the first direction and the second direction. An inner diameter of each of the through-holes is smaller than an inner diameter of the opening portion.

## Description

### 1. Field of the Invention

A technique disclosed in the present specification relates to an electrode laminate for a battery and a method for manufacturing the electrode laminate.

### 2. Description of Related Art

Japanese Unexamined Patent Application Publication No. 2018-73502 (JP 2018-73502 A) discloses an electrode laminate. The electrode laminate includes a plurality of electrode sheets that is stacked, a plurality of separators that is interposed between the electrode sheets, and a restraint member that collectively surrounds the electrode sheets and the separators. With such a configuration, displacement of the positions of the electrode sheets and the separators is suppressed by a restraint force of the restraint member. A plurality of opening portions is provided in the restraint member. The electrode sheet and a collector tab are exposed in each opening portion.

### SUMMARY OF THE INVENTION

**In** the electrode laminate as described above, even in a case where the opening portion for exposing the electrode sheet and the collector tab is present, the surface of the electrode laminate is widely covered with the restraint member. Therefore, the permeation of an electrolytic solution into the electrode laminate may be hindered by the restraint member. In view of such circumstances, the present specification provides a technique for reducing the hindrance caused by the restraint member to the permeation of the electrolytic solution into the electrode laminate, the restraint member covering the electrode laminate.

The technique disclosed in the present specification is implemented in an electrode laminate. According to a first aspect, the electrode laminate includes a plurality of electrode sheets stacked along a first direction, a separator that is elongated and extends in a zigzag shape between the electrode sheets, and a restraint member that collectively surrounds the electrode sheets and the separator. The restraint member is provided with an opening portion configured to open toward a second direction orthogonal to the first direction, and a plurality of through-holes extending through the restraint member in a third direction orthogonal to each of the first direction and the second direction. An inner diameter of each of the through-holes is smaller than an inner diameter of the opening portion.

In the electrode laminate, the restraint member that collectively surrounds the electrode sheets and the separator is provided. Therefore, displacement of the positions of the electrode sheets and the separator is suppressed by a restraint force of the restraint member. The restraint member is provided with the through-holes extending through the restraint member in the third direction, in addition to the opening portion that is open toward the second direction. As a result, the electrolytic solution can permeate into the electrode laminate through the restraint member from any direction (that is, the second direction and the third direction) orthogonal to the stacking direction (that is, the first direction) of the electrode laminate. Therefore, it is possible to significantly reduce the hindrance caused by the restraint member to the permeation of the electrolytic solution into the electrode laminate.

According to a second aspect, in the first aspect, the separator may extend in a zigzag shape back and forth along the third direction. In this case, each of the through-holes may have the inner diameter smaller than a thickness of the electrode sheet and may face a gap between two folds of the separator adjacent to each other in the first direction. The electrode sheet is exposed in the gap between the two folds of the separator adjacent to each other in the first direction. Therefore, with the above-described configuration, for example, the electrolytic solution that has passed through the restraint member through the through-holes can permeate into the electrode sheet without passing through or permeating the separator.

According to a third aspect, in the first or second aspect, each of the electrode sheets may include a collector foil and an electrode active material layer provided on one surface of the collector foil. In this case, the collector foil may include a collector tab that protrudes along the second direction in the opening portion. With such a configuration, an opening from which the collector tab protrudes does not need to be provided separately. In one example, the restraint member may have a cylindrical structure that surrounds the electrode laminate, and the opening portion may be provided at both ends of the cylindrical structure.

According to a fourth aspect, in any one of the first to third aspects, the restraint member may be made of a thermally shrinkable material.

According to a fifth aspect, in any one of the first to fourth aspects, the restraint member may be further provided with a through-hole extending through the restraint member in the first direction. With such a configuration, since the through-hole extending through the restraint member in the first direction is provided in the restraint member in addition to the through-holes extending through the restraint member in the third direction, it is possible to further reduce the hindrance caused by the restraint member to the permeation of the electrolytic solution into the electrode laminate.

The technique disclosed in the present specification is also implemented in a method for manufacturing the electrode laminate according to any one of the first to fifth aspects. For example, according to a sixth aspect, the method may include shrinking, by heating, the restraint member that is made of a thermally shrinkable material and is disposed to collectively surround the electrode sheets and the separator.

With the method, the restraint member that exerts an appropriate restraint force on the electrode sheets and the separator can be easily provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically showing a configuration of a battery 100;
FIG. 2 is a diagram showing a state of the battery 100 as viewed along a Z direction, and showing an exterior member 102 by a dotted line;
FIG. 3 is a diagram showing an electrode laminate 10 accommodated in the exterior member 102;
FIG. 4 is a cross-sectional view taken along a line IV-IV in FIG. 2, and not showing hatching for electrode sheets 20, 30 and a separator 40;
FIG. 5A is an enlarged view of a portion V(A) in FIG. 4;
FIG. 5B is an enlarged view of a portion V(B) in FIG. 4; and
FIG. 6 is a diagram including parts (A) and (B) showing, over time, a step of shrinking, by heating, a restraint member 50 that is disposed to collectively surround the electrode sheets 20, 30 and the separator 40, the parts (A) and (B) being each a cross-sectional view corresponding to FIG. 4.

### DETAILED DESCRIPTION OF EMBODIMENTS

An electrode laminate 10 of an embodiment and a battery 100 adopting the electrode laminate 10 will be described with reference to the drawings. The battery 100 is, for example, a lithium-ion secondary battery. The battery 100 has a rectangular flat plate shape. Hereinafter, a thickness direction of the battery 100 is referred to as a Z direction, a longitudinal direction of the battery 100 is referred to as an X direction, and a direction orthogonal to each of the Z direction and the X direction is referred to as a Y direction.

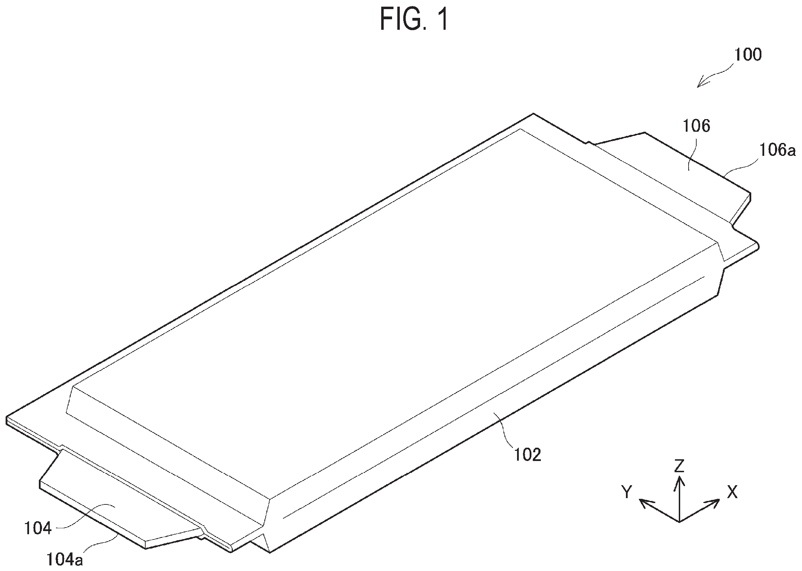

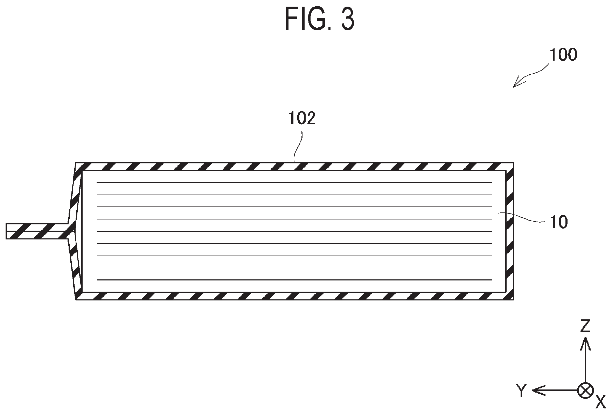

As shown in FIGS. 1 to 3, the battery 100 includes an exterior member 102. The electrode laminate 10 is sealed in the exterior member 102 together with an electrolytic solution (not shown). The exterior member 102 is made of a thin film. The exterior member 102 is, for example, a laminate film in which a resin coating film is provided on both surfaces of an aluminum foil.

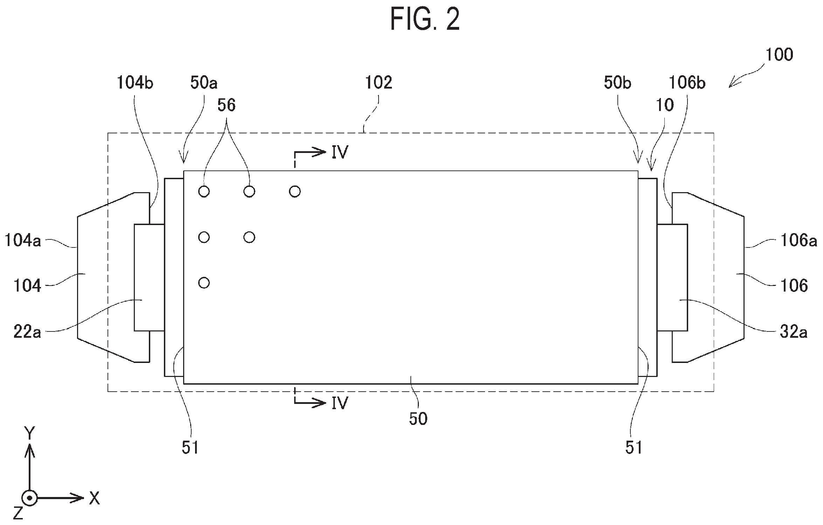

As shown in FIGS. 1 and 2, the battery 100 further includes a positive electrode terminal 104 and a negative electrode terminal 106. A first end 104a of the positive electrode terminal 104 is exposed to the outside of the exterior member 102. A second end 104b of the positive electrode terminal 104 is connected to a positive electrode collector tab 22a of each positive electrode sheet 20 of the electrode laminate 10 in the exterior member 102. A first end 106a of the negative electrode terminal 106 is exposed to the outside of the exterior member 102. A second end 106b of the negative electrode terminal 106 is connected to a negative electrode collector tab 32a of each negative electrode sheet 30 of the electrode laminate 10 in the exterior member 102.

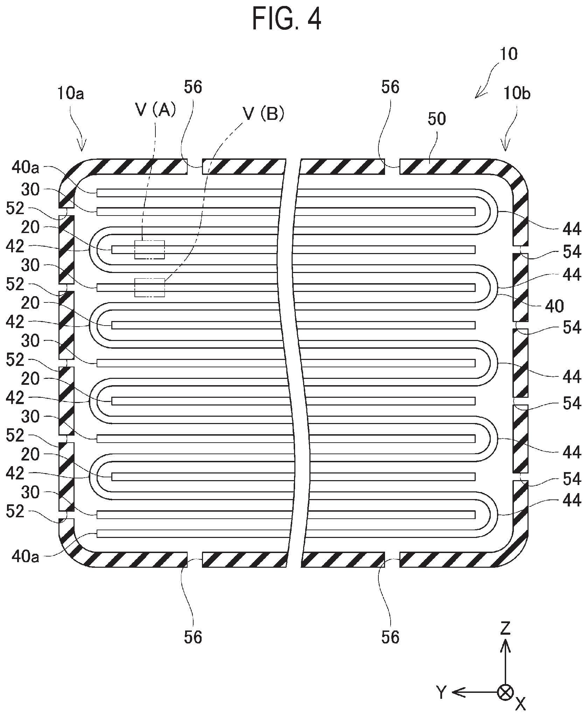

As shown in FIG. 4, the electrode laminate 10 includes the electrode sheets 20, 30 and a separator 40. The electrode sheets 20, 30 are stacked along the Z direction. Each of the electrode sheets 20, 30 has a rectangular shape as viewed along the Z direction. The electrode sheets 20, 30 include the positive electrode sheets 20 and the negative electrode sheets 30, respectively. The separator 40 is an elongated sheet. The separator 40 in the present embodiment extends in a zigzag shape between the positive electrode sheets 20 and the negative electrode sheets 30 back and forth along the Y direction. That is, the separator 40 is folded by alternately forming mountain and valley folds at predetermined intervals back and forth along the Y direction. The positive electrode sheet 20 and the negative electrode sheet 30 are alternately stacked one by one between folded portions of the separator 40. The thickness of each of the electrode sheets 20, 30 is not particularly limited, but is, for example, 10 µm or more and 500 µm or less. The numbers of the electrode sheets 20, 30 are not particularly limited.

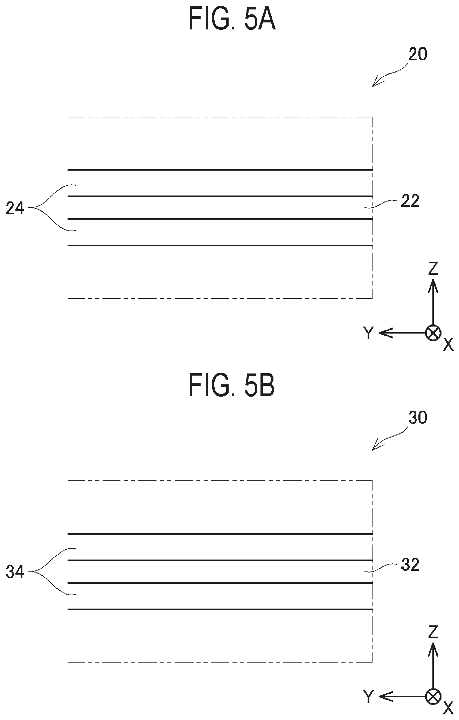

As shown in FIG. 5A, each of the positive electrode sheets 20 includes a positive electrode collector foil 22 and a positive electrode active material layer 24. Each of the positive electrode collector foil 22 and the positive electrode active material layer 24 has a rectangular shape as viewed along the Z direction. The positive electrode collector foil 22 is, for example, an aluminum foil. The positive electrode collector foil 22 includes the positive electrode collector tab 22a (see FIG. 2). The first end of the positive electrode collector tab 22a is connected to the positive electrode collector foil 22, and the second end of the positive electrode collector tab 22a is connected to the second end 104b of the positive electrode terminal 104. As a result, the positive electrode collector foil 22 is connected to the second end 104b of the positive electrode terminal 104 via the positive electrode collector tab 22a. The positive electrode collector tab 22a is provided at the end part of the positive electrode collector foil 22 in the -X direction, and protrudes from the positive electrode collector foil 22 along the -X direction. The positive electrode collector tab 22a in the present embodiment is joined to the positive electrode collector foil 22 by welding or the like. However, as another embodiment, the positive electrode collector tab 22a may be provided integrally with the positive electrode collector foil 22.

The positive electrode active material layer 24 is provided on both surfaces of the positive electrode collector foil 22. The positive electrode active material layer 24 contains a positive electrode active material. Examples of the positive electrode active material include a lithium nickel-based composite oxide, a lithium cobalt-based composite oxide, and a lithium manganese-based composite oxide. The positive electrode active material may contain one kind of material or may contain two or more kinds of materials. The positive electrode active material layer 24 may further contain a binder, a conductive auxiliary agent, and the like. The positive electrode active material layer 24 is not necessarily provided on both surfaces of the positive electrode collector foil 22. That is, in another embodiment, the positive electrode active material layer 24 may be provided on one surface of the positive electrode collector foil 22.

As shown in FIG. 5B, each of the negative electrode sheets 30 includes a negative electrode collector foil 32 and a negative electrode active material layer 34. Each of the negative electrode collector foil 32 and the negative electrode active material layer 34 has a rectangular shape as viewed along the Z direction. The negative electrode collector foil 32 is, for example, a copper foil. The negative electrode collector foil 32 includes the negative electrode collector tab 32a (see FIG. 2). The first end of the negative electrode collector tab 32a is connected to the negative electrode collector foil 32, and the second end of the negative electrode collector tab 32a is connected to the second end 106b of the negative electrode terminal 106. As a result, the negative electrode collector foil 32 is connected to the second end 106b of the negative electrode terminal 106 via the negative electrode collector tab 32a. The negative electrode collector tab 32a is provided at the end part of the negative electrode collector foil 32 in the +X direction, and protrudes from the negative electrode collector foil 32 along the +X direction. The negative electrode collector tab 32a in the present embodiment is joined to the negative electrode collector foil 32 by welding or the like. However, as another embodiment, the negative electrode collector tab 32a may be provided integrally with the negative electrode collector foil 32.

The negative electrode active material layer 34 is provided on both surfaces of the negative electrode collector foil 32. The negative electrode active material layer 34 contains a negative electrode active material. Examples of the negative electrode active material include a carbon material such as graphite, hard carbon, and soft carbon, a material that alloys with lithium such as silicon (Si), and a lithium alloy. The negative electrode active material may contain one kind of material or may contain two or more kinds of materials. The negative electrode active material layer 34 may further contain a binder or the like. The negative electrode active material layer 34 is not necessarily provided on both surfaces of the negative electrode collector foil 32. That is, in another embodiment, the negative electrode active material layer 34 may be provided on one surface of the negative electrode collector foil 32.

The separator 40 is configured to allow passage of a charge carrier (here, a lithium ion). The separator 40 is made of, for example, an insulating material such as polypropylene and polyethylene. Examples of the separator 40 include a porous polyethylene film and a porous polypropylene film.

As shown in FIG. 4, the electrode laminate 10 further includes a restraint member 50. The restraint member 50 collectively surrounds the electrode sheets 20, 30 and the separator 40. The restraint member 50 extends around the periphery of the electrode sheets 20, 30 and the separator 40. With such a configuration, it is possible to suppress displacement of the positions of the electrode sheets 20, 30 and the separator 40 by the restraint force of the restraint member 50.

As shown in FIG. 2, the restraint member 50 includes two opening portions 51. Each of the two opening portions 51 is open in the X direction. One of the two opening portions 51 is provided at an end part 50a of the restraint member 50 in the -X direction, and the other of the two opening portions 51 is provided at an end part 50b of the restraint member 50 in the +X direction. In one example, the restraint member 50 in the present embodiment is made of a sheet material. The restraint member 50 has a cylindrical structure, and the two opening portions 51 are provided at the respective ends of the cylindrical structure. In one of the two opening portions 51, the positive electrode collector tab 22a protrudes in the -X direction, and in the other of the two opening portions 51, the negative electrode collector tab 32a protrudes in the +X direction. With such a configuration, it is not necessary to separately provide, in the restraint member 50, an opening from which each of the electrode collector tab 22a and the electrode collector tab 32a protrudes. However, as another embodiment, the restraint member 50 may be further provided with an opening from which each of the electrode collector tab 22a and the electrode collector tab 32a protrudes.

As shown in FIG. 4, the restraint member 50 further includes a plurality of first through-holes 52 and a plurality of second through-holes 54. The first through-holes 52 are positioned in the +Y direction relative to the electrode sheets 20, 30 and the separator 40, and penetrate along the Y direction. The first through-holes 52 are relatively fine holes, and the inner diameter of the first through-hole 52 is sufficiently smaller than the inner diameter of the opening portion 51. The first through-holes 52 are arranged in the Z direction in accordance with the positions of the negative electrode sheets 30 stacked in the Z direction. As described above, the separator 40 extends in a zigzag shape back and forth along the Y direction. Therefore, in an end part 10a of the electrode laminate 10 in the +Y direction, a plurality of folds 42 of the separator 40 is arranged along the Z direction. Then, the negative electrode sheet 30 is exposed in each gap between two adjacent folds 42. Therefore, the first through-holes 52 are arranged along the Z direction such that each of the first through-holes 52 faces a gap between two adjacent folds 42 (that is, one corresponding negative electrode sheet 30). Two or more first through-holes 52 may be provided for each gap between two folds 42 of the separator 40.

The second through-holes 54 are positioned in the -Y direction relative to the electrode sheets 20, 30 and the separator 40, and penetrate along the Y direction. The second through-holes 54 are also relatively fine holes, and the inner diameter of the second through-hole 54 is sufficiently smaller than the inner diameter of the opening portion 51. The second through-holes 54 are arranged in the Z direction in accordance with the positions of the positive electrode sheets 20 stacked in the Z direction. In an end part 10b of the electrode laminate 10 in the +Y direction, a plurality of folds 44 of the separator 40 is also arranged along the Z direction. Then, the positive electrode sheet 20 is exposed in each gap between two adjacent folds 44. Therefore, the second through-holes 54 are arranged along the Z direction such that each of the second through-holes 54 faces a gap between two adjacent folds 44 (that is, one corresponding positive electrode sheet 20). Two or more second through-holes 54 may be provided for each gap between two folds 44 of the separator 40.

As described above, in the electrode laminate 10 of the present embodiment, the electrode sheets 20, 30 and the separator 40 are surrounded by the restraint member 50. In such a structure, for example, in a case of manufacturing the battery 100, there is a concern that the electrolytic solution injected into the exterior member 102 is unlikely to permeate into the electrode laminate 10. That is, the permeation of the electrolytic solution into the electrode laminate 10 may be hindered by the restraint member 50. However, the restraint member 50 in the present embodiment has a cylindrical structure, and has the opening portions 51 at the respective ends in the X direction. In addition, the restraint member 50 is provided with the first through-holes 52 and the second through-holes 54 extending through the restraint member 50 in the Y direction. With such a configuration, for example, in the case of manufacturing the battery 100, the electrolytic solution injected into the exterior member 102 can permeate into the electrode laminate 10 through the restraint member 50 from any direction (that is, the X direction and the Y direction) orthogonal to the stacking direction (that is, the Z direction) of the electrode laminate 10. That is, it is possible to significantly reduce the hindrance caused by the restraint member 50 to the permeation of the electrolytic solution into the electrode laminate 10.

In particular, each of the first through-holes 52 faces a gap between two adjacent folds 42 of the separator 40 in the Z direction. The negative electrode sheet 30 is exposed in each gap between two adjacent folds 42 of the separator 40. Therefore, the electrolytic solution that has passed through the first through-holes 52 can permeate into each of the negative electrode sheets 30 without passing through or permeating the separator 40. Here, each of the first through-holes 52 may have an inner diameter smaller than the thickness of the negative electrode sheet 30. Similarly, each of the second through-holes 54 faces a gap between two adjacent folds 44 of the separator 40 in the Z direction. The positive electrode sheet 20 is exposed in each gap between two adjacent folds 44 of the separator 40. Therefore, the electrolytic solution that has passed through the second through-holes 54 can permeate into each of the positive electrode sheets 20 without passing through or permeating the separator 40. Here, each of the second through-holes 54 may have an inner diameter smaller than the thickness of the positive electrode sheet 20.

The inner diameter of the first through-hole 52 is not particularly limited, but may be, for example, 100 µm or more and 100 mm or less. The inner diameter of the second through-hole 54 is not particularly limited, but may be, for example, 100 µm or more and 100 mm or less. With such a configuration, the electrolytic solution easily passes through the first through-holes 52 and the second through-holes 54.

An interval between two adjacent first through-holes 52 is not particularly limited, but may be 1 mm or more. The interval between the two adjacent first through-holes 52 may be larger than the inner diameter of the first through-hole 52. An interval between two adjacent second through-holes 54 is also not particularly limited, but may be 1 mm or more, and may be larger than the inner diameter of the second through-hole 54. With such a configuration, it is possible to effectively avoid the breakage of the restraint member 50 with the first through-holes 52 and/or the second through-holes 54 as starting points.

In one example, as shown in FIG. 4, the first through-hole 52 that faces the gap between the first end 40a of the separator 40 and the fold 42 adjacent to the first end 40a may be further provided in the Z direction. That is, one or more first through-holes 52 may be further provided for each of the two negative electrode sheets 30 positioned at the end part in the Z direction. In other words, at least one through-hole 52, 54 may be provided for all of the electrode sheets 20, 30. However, as another embodiment, at least one through-hole 52, 54 may be provided for at least one electrode sheet 20, 30.

In one example, the restraint member 50 is made of a thermally shrinkable material. Examples of the thermally shrinkable material include polyethylene terephthalate, polystyrene, polyolefin, polyvinyl chloride, and polycarbonate. The restraint member 50 may be a heat-shrinkable sheet including one or more of the materials. The heat-shrinkable sheet refers to a sheet having a shrinkage rate (hereinafter, referred to as a basic thermal shrinkage rate) in a main shrinkage direction of 10% or more in a case of being immersed in hot water at 80°C for 10 seconds. The basic thermal shrinkage rate of the heat-shrinkable sheet is preferably 15% to 100%, and more preferably 20% to 85%. The basic thermal shrinkage rate can be obtained, for example, as follows. A test piece cut into a square of 10 cm × 10 cm is immersed in hot water at 80°C for 10 seconds in an unloaded state to be thermally shrunk. Next, the test piece after thermal shrinkage is immersed in water at 25°C for 10 seconds to be cooled. Dimensions of the test piece in a longitudinal direction and a lateral direction taken out from the water are measured, and a thermal shrinkage rate in the longitudinal direction and a thermal shrinkage rate in the lateral direction are each calculated according to the following expression. Then, a direction having a larger thermal shrinkage rate among the thermal shrinkage rate in the longitudinal direction and the thermal shrinkage rate in the lateral direction is defined as the main shrinkage direction, and the thermal shrinkage rate in the direction is defined as the basic thermal shrinkage rate. 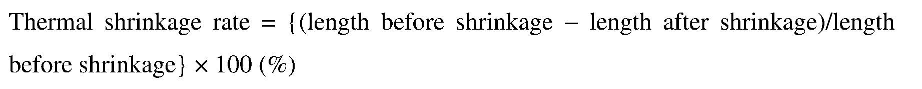 Thermal shrinkage rate = {(length before shrinkage - length after shrinkage)/length before shrinkage} × 100 (%) The thermal shrinkage rate of the restraint member 50 in each of the Y direction and the Z direction is preferably 10% or more.

In one example, as shown in FIGS. 2 and 4, the restraint member 50 further includes a plurality of third through-holes 56. The third through-holes 56 penetrate the restraint member 50 in the Z direction. Some of the third through-holes 56 are positioned in the +Z direction relative to the electrode sheets 20, 30 and the separator 40. The remaining third through-holes 56 are positioned in the -Z direction relative to the electrode sheets 20, 30 and the separator 40. The number of the third through-holes 56 is not particularly limited. In addition, the third through-holes 56 may be positioned only in the +Z direction relative to the electrode sheets 20, 30 and the separator 40, or may be positioned only in the -Z direction relative to the electrode sheets 20, 30 and the separator 40. The sizes and the arrangement (that is, the intervals) of the third through-holes 56 may be the same as those of the first through-holes 52 and/or the second through-holes 54 described above.

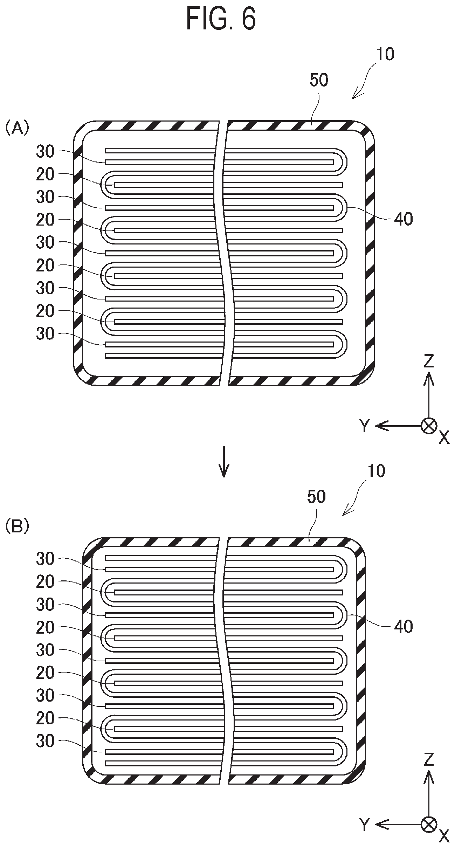

Next, a method for manufacturing the electrode laminate 10 is described with reference to parts (A) and (B) of FIG. 6. The method includes a step of shrinking, by heating, the restraint member 50 disposed to collectively surround the electrode sheets 20, 30 and the separator 40. In this step, first, as shown in the part (A) of FIG. 6, the restraint member 50 is disposed so as to extend around the periphery of the electrode sheets 20, 30 and the separator 40. The restraint member 50 is made of a thermally shrinkable material. The restraint member 50 may be, for example, the above-described heat-shrinkable sheet. Therefore, as shown in the part (B) of FIG. 6, the restraint member 50 is heated to cause the restraint member 50 to shrink. As a result, the restraint member 50 that exerts an appropriate restraint force on the electrode sheets 20, 30 and the separator 40 can be easily provided.

In one example, the method may further include a step of providing the through-holes 52, 54, 56 in the restraint member 50 after the above-described step. As a result, the electrode laminate 10 can be manufactured. However, instead of this, the through-holes 52, 54, 56 may be provided in the restraint member 50 before the restraint member 50 is shrunk by heating. In this case, for example, the restraint member 50 can be made of a porous heat-shrinkable sheet.

In the above-described embodiment, the separator 40 extends in a zigzag shape back and forth along the Y direction. However, as another embodiment, the separator 40 may extend in a zigzag shape back and forth along the X direction.

Although several specific examples have been described in detail above, these are merely examples and do not limit the scope of the claims. The techniques described in the claims include various modifications and changes of the specific examples exemplified above. The technical elements described in the present specification or the drawings exhibit technical usefulness alone or in combination.

## Claims

1. An electrode laminate (10) comprising:
a plurality of electrode sheets (20,30) stacked along a first direction (Z);
a separator (40) that is elongated and extends in a zigzag shape between the electrode sheets (20,30); and
a restraint member (50) that collectively surrounds the electrode sheets (20,30) and the separator (40), wherein:
the restraint member (50) is provided with an opening portion (51) configured to open toward a second direction (X) orthogonal to the first direction (Z), and a plurality of through-holes (52,54) extending through the restraint member (50) in a third direction (Y) orthogonal to each of the first direction (Z) and the second direction (X); and
an inner diameter of each of the through-holes (52,54) is smaller than an inner diameter of the opening portion (51).

2. The electrode laminate (10) according to claim 1, wherein:
the separator (40) extends in a zigzag shape back and forth along the third direction (Y); and
each of the through-holes (52,54) has the inner diameter smaller than a thickness of the electrode sheet (20,30) and faces a gap between two folds of the separator (40) adjacent to each other in the first direction (Z).

3. The electrode laminate (10) according to any one of claims 1 or 2, wherein:
each of the electrode sheets (20,30) includes a collector foil (22) and an electrode active material layer (24) provided on one surface of the collector foil (22); and
the collector foil (22) includes a collector tab (22a) that protrudes along the second direction (X) in the opening portion (51).

4. The electrode laminate (10) according to any one of claims 1 to 3, wherein the restraint member (50) is made of a thermally shrinkable material.

5. The electrode laminate (10) according to any one of claims 1 to 4, wherein the restraint member (50) is further provided with a through-hole (56) extending through the restraint member (50) in the first direction (Z).

6. A method for manufacturing the electrode laminate (10) according to any one of claims 1 to 5, the method comprising:
shrinking, by heating, the restraint member (50) that is made of a thermally shrinkable material and is disposed to collectively surround the electrode sheets (20,30) and the separator (40).
